# EUROPÄISCHE PATENTANMELDUNG

(11) **EP 3 288 215 A1**
(43) Veröffentlichungstag der Anmeldung: **28.02.2018**
(21) Anmeldenummer: 16185560.6
(22) Anmeldetag: 24.08.2016
(51) Int. Cl.: H04L 9/32

(54) **VERFAHREN UND VORRICHTUNG ZUR AUSGABE VON AUTHENTIZITÄTSBESCHEINIGUNGEN SOWIE EIN SICHERHEITSMODUL**

(71) Anmelder: Siemens Aktiengesellschaft, 80333 München (DE)
(72) Erfinder: Brockhaus, Hendrik, 85579 Unterbiberg (DE); Bußer, Jens-Uwe, 85579 Neubiberg (DE)

(57) **Zusammenfassung**

Das Verfahren zur Ausgabe von Authentizitätsbescheinigungen, wobei für jede Authentizitätsbescheinigung (Cert_{Sign}) eine digitale Signatur (Sign) unter Verwendung eines Signaturschlüssels in einem Sicherheitsmodul erzeugt wird, umfasst die Verfahrensschritte:
- Überprüfen (111) einer Anzahl von bereits erzeugten digitalen Signaturen vor der Erzeugung einer weiteren digitalen Signatur (Sign) durch das Sicherheitsmodul,
- Erzeugen (112) einer digitalen Signatur (Sign) lediglich dann, wenn die Anzahl von bereits erzeugten digitalen Signaturen (Sign) geringer ist als vorgegebene maximale Anzahl (Nmax), und
- Ausgeben (113) einer Authentizitätsbescheinigung mit der digitalen Signatur.

Durch das Verfahren kann ein Schaden durch Kompromittierung des Sicherheitsmoduls bzw. eine Ausgabevorrichtung für Authentizitätsbescheinigungen begrenzt werden. Der Betrieb von Ausgabevorrichtungen ist dadurch auch an nicht optimal schützbaren Umgebungen möglich.

## Beschreibung

Die Erfindung betrifft ein Verfahren und eine Vorrichtung zur Ausgabe von Authentizitätsbescheinigungen, wobei für jede Authentizitätsbescheinigung eine digitale Signatur unter Verwendung eines Signaturschlüssels in einem Sicherheitsmodul erzeugt wird sowie ein entsprechendes Sicherheitsmodul.

Es sind Authentizitätsbescheinigungen, wie beispielsweise digitale Zertifikate, bekannt. In einem zertifikatbasierten System erhält jede Person oder jedes Objekt ein digitales Zertifikat, welches Angaben zu seiner Identität und einen öffentlichen Schlüssel der Person bzw. des Objekts enthält. Jedes Zertifikat ist von einer ausgebenden Stelle durch eine digitale Signatur beglaubigt, die ihrerseits wieder von höheren Stellen beglaubigt sein kann. Das Vertrauenssystem einer solchen Private Key Infrastructure PKI ist streng hierarchisch. Den gemeinsamen Vertrauensanker bildet ein sogenanntes Wurzelzertifikat, auch Root Certificate genannt.

Auch die Authentizität und Integrität eines digitalen Zertifikats werden durch die digitale Signatur geprüft. Dazu wird mit Hilfe eines geheimen Signaturschlüssels, auch als privater Schlüssel bezeichnet, zu einem Datensatz ein Wert berechnet, der digitale Signatur genannt wird. Dieser Wert ermöglicht es jedem, mit Hilfe des zugehörigen öffentlichen Verifikationsschlüssels, auch als öffentlicher Schlüssel bezeichnet, die nichtabstreitbare Urheberschaft und Integrität des Datensatzes zu prüfen. Um eine mit einem Signaturschlüssel erstellte Signatur einer Person zuordnen zu können, muss der zugehörige Verifikationsschlüssel dieser Person zweifelsfrei zugeordnet sein.

In einem Gerätezertifikat wird die Identität des Gerätes, beispielsweise eine Seriennummer oder MAC-Adresse des Gerätes, an einen öffentlichen Schlüssel des Gerätes gebunden. Gerätezertifikate werden vorzugsweise bereits in der Fertigung aufgebracht und dienen auch als Echtheitsbestätigung für das Gerät. Gerätezertifikate haben üblicherweise eine sehr lange Gültigkeitsdauer, damit das Gerät dieses Zertifikat während seines gesamten Einsatzzeitraumes verwenden kann, um beispielsweise als Vertrauensanker zur Anforderung oder Erstellung von weiteren Zertifikaten für den operativen Betrieb zu dienen. Dazu müssen auch ein Zertifikat der ausstellenden Zertifizierungsinstanz sowie gegebenenfalls weitere Zwischenzertifikate bis zum vertrauenswürdigen Root-Zertifikat im Gerät verfügbar sein und über einen entsprechend langen Zeitraum gültig sein.

Wird eine dieser Zertifizierungsinstanzen während der Gültigkeit ihres Zertifikates kompromittiert bzw. besteht zumindest der begründete Verdacht, dass ein vertraulicher Signaturschlüssel der Zertifizierungsinstanz nicht mehr geheim sondern unbefugten Dritten bekannt geworden ist, so können auch alle von dieser Zertifizierungsinstanz sowie allen untergeordneten Instanzen erstellten Zertifikate nicht mehr als vertrauenswürdig betrachtet werden. Eine Kompromittierung kann auch darin bestehen, wenn ein Signaturschlüssel zwar nicht bekannt geworden ist, aber möglicherweise von Unbefugten zur Erstellung von Signaturen oder Zertifikaten genutzt wurde.

Als Signaturschlüssel wird im Weiteren ein privater Schlüssel der Zertifizierungsinstanz genannt, mit dem ein auszugebendes Zertifikat signiert und somit als gültig bestätigt wird. Eine Zertifizierungsinstanz wird im Weiteren auch allgemein als Vorrichtung zur Ausgabe oder Ausgabevorrichtung von Zertifikaten bezeichnet. Eine solche Ausgabevorrichtung kann auch andere Sicherheits-Datenstrukturen, wie beispielsweise Sicherheits-Token, durch eine Signatur bestätigen und ausgeben.

Um eine solche Kompromittierung zu vermeiden, werden Zertifizierungsinstanzen üblicherweise sehr gut geschützt. Dazu werden diese üblicherweise in besonders gut gesicherten Rechenzentren betrieben. Bekannt ist auch die Speicherung von geheimen symmetrischen und privaten asymmetrischen Schlüsseln in Software. Dabei werden diese Schlüssel in der installierten Software oder Firmware eincodiert. Alternativ können die Schlüssel auch geräteindividuell in einer Datei auf dem Gerät gespeichert werden. In beiden Ansätzen können die Schlüssel mehr oder weniger gut, beispielsweise durch Verschlüsselung oder Obfuskation, geschützt werden.

Bekannt ist ebenfalls die Speicherung von geheimen und privaten Schlüsseln in physikalisch besonders geschützten Sicherheitsmodulen, die auch als Hardware Security Modules bezeichnet werden. Geheime bzw. private Schlüssel können in das Modul eingespielt oder darin erzeugt werden. Ein Auslesen der Schlüssel aus dem Sicherheitsmodul ist üblicherweise nicht oder nur sehr eingeschränkt möglich. Eine Durchführung von kryptographischen Algorithmen unter Verwendung des gespeicherten Schlüssels findet üblicherweise im Sicherheitsmodul selbst statt. Für die Verwendung der Schlüssel ist oft eine Authentifizierung notwendig, beispielsweise durch Übergabe einer Geheimzahl oder eines Passwortes an das Sicherheitsmodul.

In manchen Fällen werden Vorrichtungen zur Ausgabe von digital signierten Authentizitätsbescheinigungen in einer wenig geschützten Umgebung, beispielsweise in Substationen eines Energieverteilungsnetzwerkes oder auch bei einem Auftragsfertiger, der für den eigentlichen Gerätehersteller Geräte fertigt, benötigt. In solchen Fällen soll vor Ort eine Authentizitätsbescheinigung für ein Gerät erstellt und dem Gerät zugewiesen bzw. im Falle eines Gerätezertifikates bei der Herstellung eingebracht werden. Solche Ausgabevorrichtungen können weit weniger vor Kompromittierung durch unbefugte Dritte geschützt werden.

Es ist somit die Aufgabe der vorliegenden Erfindung, ein Verfahren und eine Vorrichtung zur Ausgabe von digital signierten Authentizitätsbescheinigungen zu schaffen, sodass die Möglichkeit einer Kompromittierung reduziert und im Falle einer Kompromittierung der Schaden daraus minimiert bzw. in einem überschaubaren Rahmen gehalten wird.

Die Aufgabe wird durch die in den unabhängigen Ansprüchen beschriebenen Merkmale gelöst. In den Unteransprüchen sind vorteilhafte Weiterbildungen der Erfindung dargestellt.

Das erfindungsgemäße Verfahren zur Ausgabe von Authentizitätsbescheinigungen, wobei für jede Authentizitätsbescheinigung eine digitale Signatur unter Verwendung eines Signaturschlüssels in einem Sicherheitsmodul erzeugt wird, weist folgende Verfahrensschritte auf: Ein Überprüfen einer Anzahl von bereits erzeugten digitalen Signaturen vor der Erzeugung einer weiteren digitalen Signatur durch das Sicherheitsmodul, ein Erzeugen einer digitalen Signatur lediglich dann, wenn die Anzahl von bereits erzeugten digitalen Signaturen geringer ist als eine vorgegebene maximale Anzahl von digitalen Signaturen und ein Ausgeben einer Authentizitätsbescheinigung mit der digitalen Signatur.

Durch das beschriebene Verfahren wird die Anzahl der mit einem bestimmten Signaturschlüssel signierten Authentizitätsbescheinigungen auf einen vorgegebenen Maximalwert begrenzt, da lediglich Authentizitätsbescheinigungen mit digitaler Signatur ausgegeben werden. Eine Authentizitätsbescheinigung ohne digitale Signatur stellt keine vertrauenswürdige Basis für einen Empfänger der Authentizitätsbescheinigung dar und ist somit wertlos. Wird beispielsweise ein Sicherheitsmodul, das den Signaturschlüssel an sich vor einem Zugriff Fremder schützt, als Ganzes beispielsweise gestohlen, so können damit lediglich eine begrenzte Anzahl von Zertifikaten ausgestellt werden. Wird die Kompromittierung erkannt, so müssen lediglich eine begrenzte Anzahl von Authentizitätsbescheinigungen als ungültig widerrufen werden.

Eine Authentizitätsbescheinigung kann beispielsweise ein digitales Gerätezertifikat oder auch ein digitales operatives Zertifikat sein. Wird der Signaturschlüssel zur Erzeugung von Geräte- oder operativen Zertifikaten auch für andere Prozesse verwendet, beispielsweise zur Bestätigung von Protokollierungsdaten oder Audit Trails in einer Datenbank oder zur Signatur einer Widerrufsliste für Authentizitätsbescheinigungen, zur Signatur von Zertifikatsmanagementnachrichten oder auch zum Aufbau von sicheren Verbindungen, z.B. zu einer Registrierungsstelle, mittels TLS-Protokoll, usw., so ist dies bei der Festlegung des Maximalwerts entsprechend zu berücksichtigen.

Ein Sicherheitsmodul kann beispielsweise ein Hardware-Sicherheitsmodul sein, das als externes oder internes Peripheriegerät für eine sichere Ausführung kryptographischer Operationen verwendet wird. In einem Sicherheitsmodul sind kryptographische Schlüssel, beispielsweise softwaretechnisch oder auch hardwaretechnisch geschützt. In dem genannten Sicherheitsmodul sind des Weiteren kryptographische Algorithmen implementiert und werden dort ausgeführt. Beispielsweise wird ein RSA-Algorithmus für asymmetrische Kryptoverfahren dort implementiert.

In einer vorteilhaften Ausführungsform wird die maximale Anzahl von erzeugbaren digitalen Signalen im Sicherheitsmodul eingestellt.

Dies ermöglicht eine flexible Anpassung von erzeugbaren digitalen Signaturen an das Anwendungsgebiet.

In einer vorteilhaften Ausführungsform wird der Signaturschlüssel gesperrt und/oder gelöscht, wenn die maximale Anzahl von digitalen Signaturen erzeugt wurde.

Durch das Sperren und/oder Löschen kann die weitere Verwendung des Signaturschlüssels verhindert werden. Ein Sperren des Signaturschlüssels hat den Vorteil, dass im weiteren Verlauf der Signaturschlüssel beispielsweise entsperrt und wiederverwendet werden kann. Ein Löschen des Signaturschlüssels hat den Vorteil, dass eine Weiterverwendung des Signaturschlüssels ausgeschlossen ist und somit eine ungewollte Verwendung des Signaturschlüssels ausgeschlossen wird.

In einer vorteilhaften Ausführungsform werden zumindest zwei unterschiedliche Signaturschlüssel im Sicherheitsmodul eingerichtet und für jeden Signaturschlüssel wird getrennt eine maximale Anzahl von erzeugbaren digitalen Signaturen eingestellt und überprüft.

Dies ermöglicht es, verschiedene Signaturschlüssel beispielsweise gleichzeitig, zeitlich versetzt oder zeitlich aufeinanderfolgend zu verwenden. So können beispielsweise Authentizitätsbescheinigungen für unterschiedliche Gerätetypen mit verschiedenen digitalen Signaturen parallel erzeugt werden.

In einer vorteilhaften Ausführungsform werden die unterschiedlichen Signaturschlüssel unabhängig voneinander aktiviert.

Dies ermöglicht beispielsweise ein unabhängiges Freischalten unterschiedlicher Signaturschlüssel. Es kann aber beispielsweise auch der gleiche Signaturschlüssel mit einer weiteren maximalen Anzahl daraus erzeugbarer digitaler Signaturen unabhängig von einer ersten maximalen Anzahl nachträglich oder bei Bedarf aktiviert werden.

In einer vorteilhaften Ausführungsform werden im Wesentlichen gleichzeitig digitale Signaturen von mindestens einem Signaturschlüssel ohne Beschränkung der erzeugbaren Anzahl von digitalen Signaturen erzeugt.

Dies hat den Vorteil, dass parallel Signaturen mit und ohne Beschränkung der maximal erzeugbaren Signaturen ausgegeben werden können. So kann beispielsweise ein Signaturschlüssel mit einer beschränkten Anzahl von erzeugbaren Signaturen für die Signierung von Zertifikaten verwendet werden und gleichzeitig ein Signaturschlüssel ohne Nutzungsbeschränkung, also ohne maximale Anzahl erzeugbarer Signaturen, zur Signatur von beispielsweise Zertifikat-Managementnachrichten verwendet werden. Es kann beispielsweise ein Zähler zur Überwachung der Anzahl der ausgegebenen Signaturen auf unendlich gesetzt werden oder kein Zähler für den entsprechenden Signaturschlüssel eingerichtet werden.

In einer vorteilhaften Ausführungsform werden Administrationsvorgänge, insbesondere eine Einstellung der maximalen Anzahl ausgebbarer digitaler Signaturen, direkt am Sicherheitsmodul eingestellt oder über eine externe Kommunikationsverbindung eingestellt.

Dies hat den Vorteil, dass die Ausgabe von Authentizitätsbescheinigungen, die außerhalb einer vertrauenswürdigen Umgebung angesiedelt ist, fern-überwacht werden kann und Einstellungen beispielsweise von einer Überwachungseinheit beim Hersteller vorgenommen werden können. So kann beispielsweise eine signierte Datei, die über eine Kommunikationsverbindung von einem räumlich entfernt angesiedelten Hersteller in der Ausgabevorrichtung empfangen werden und dadurch ein neuer Signaturschlüssel aktiviert werden oder die maximale erzeugbare Anzahl von digitalen Signaturen eines Signaturschlüssels erhöht werden.

Des Weiteren werden in einer Ausführungsform für unterschiedliche Administrationsvorgänge am Sicherheitsmodul verschiedene Berechtigungen und/oder Kennungen eingerichtet.

Dabei können unterschiedliche Berechtigungen für verschiedene Einstellungen, wie beispielsweise die Administration unterschiedlicher Schlüssel oder die Änderung der maximalen Anzahl von ausgebbaren digitalen Zertifikaten vergeben werden. Die Berechtigungen können beispielsweise je nach Sensibilität der Einstellung unterteilt sein. Entsprechend können durch unterschiedliche Kennungen der verschiedenen Berechtigungen flexible Rechte an lokale Administratoren oder lediglich zentrale Administratoren vergeben werden.

In einer Ausführungsform wird ein Administrationsvorgang am Sicherheitsmodul durch mindestens eine signierte Datei eingerichtet.

Dies hat den Vorteil, dass durch die Signatur der Datei die sendende Stelle authentifiziert werden kann und die Integrität des Inhalts der Datei überprüft werden kann.

Die erfindungsgemäße Vorrichtung zur Ausgabe von digital signierten Authentizitätsbescheinigungen enthält ein Sicherheitsmodul und eine Ausgabeeinheit, wobei das Sicherheitsmodul derart ausgebildet ist, eine Anzahl von bereits erzeugten digitalen Signaturen vor der Erzeugung einer weiteren digitalen Signatur zu überprüfen, eine digitale Signatur unter Verwendung eines Signaturschlüssels lediglich dann zu erzeugen, wenn die Anzahl der bereits erzeugten digitalen Signaturen geringer ist als die eingestellte maximale Anzahl, und die Ausgabeeinheit derart ausgebildet ist, Authentizitätsbescheinigungen mit einer digitalen Signatur auszugeben.

Eine solche Vorrichtung hat den Vorteil, dass bei einer Manipulation der Vorrichtung, wie beispielsweise deren Diebstahl, lediglich eine begrenzte Anzahl von digitalen Signaturen erzeugt und damit lediglich die entsprechende Anzahl an Authentizitätsbescheinigungen ausgegeben werden können. Die Festlegung einer maximalen Anzahl erzeugbarer digitaler Signaturen ist dabei vorteilhaft gegenüber einem Rücksetzen des Zählers, da letzteres möglicherweise für einen Replay-Angriff eingesetzt werden kann. Das Zurücksetzen des Zählers auf einen geringeren Zählerstand ist dann zu verhindern.

In einer vorteilhaften Ausführungsform ist das Sicherheitsmodul derart ausgebildet, den Signaturschlüssel zu sperren und/oder zu löschen, wenn die maximale Anzahl von digitalen Signaturen erzeugt wurde.

In einer vorteilhaften Ausführungsform ist die maximale Anzahl von erzeugbaren digitalen Signaturen im Sicherheitsmodul einstellbar.

In einer vorteilhaften Ausführungsform ist das Sicherheitsmodul derart ausgebildet, zumindest zwei unterschiedliche Signaturschlüssel einzurichten und für jeden Signaturschlüssel getrennt eine maximale Anzahl von erzeugbaren digitalen Signaturen einzustellen und zu überprüfen und/oder die unterschiedlichen Signaturschlüssel unabhängig voneinander zu aktivieren. Das Sicherheitsmodul ist des Weiteren derart ausgebildet, im Wesentlichen gleichzeitig digitale Signaturen von mindestens einem Signaturschlüssel ohne Beschränkung der erzeugbaren Anzahl von digitalen Signaturen zu erzeugen.

Dies ermöglicht einen flexiblen Einsatz der Ausgabevorrichtung für Authentizitätsbescheinigungen. So kann beispielsweise ein Signaturschlüssel mit einer maximalen Anzahl von ausstellbaren Signaturen zur Erzeugung von Gerätezertifikaten eingesetzt werden, ein Signaturschlüssel ohne Begrenzung der maximalen Anzahl von erzeugbaren digitalen Signaturen zur Erzeugung von Authentizitätsbescheinigungen für andere Aufgaben verwendet werden.

In einer vorteilhaften Ausführungsform ist die Vorrichtung derart ausgebildet, Administrationsvorgänge insbesondere eine Einstellung der maximalen Anzahl ausgebbarer digitaler Signaturen direkt am Sicherheitsmodul einzustellen oder indirekt über eine externe Kommunikationsverbindung einzustellen und/oder für unterschiedliche Administrationsvorgänge am Sicherheitsmodul verschiedene Berechtigungen und/oder Kennungen einzustellen.

In einer vorteilhaften Ausführungsform ist mindestens ein Administrationsvorgang am Sicherheitsmodul durch mindestens eine signierte Datei einrichtbar.

Dies hat den Vorteil, dass beispielsweise die Anzahl der mit einem Schlüssel insgesamt ausstellbaren Signaturen nachträglich erhöht werden kann, ohne dass die berechtigte Stelle direkten Zugang zum Sicherheitsmodul haben muss.

Es wird des Weiteren ein Computerprogrammprodukt beansprucht, das direkt in einen Speicher eines digitalen Prozessors ladbar ist, umfassend Programmcodeteile, die dazu geeignet sind, die Schritte des Verfahrens durchzuführen.

Ausführungsbeispiele des erfindungsgemäßen Verfahrens und der erfindungsgemäßen Ausgabevorrichtung für Authentizitätsbescheinigungen sowie ein Anwendungsbeispiel des erfindungsgemäßen Verfahrens sind in den Zeichnungen beispielhaft dargestellt und werden anhand der nachfolgenden Beschreibung näher erläutert. Es zeigen:
- Figur 1: eine Ausführungsform des erfindungsgemäßen Verfahrens als Ablaufdiagramm;
- Figur2: ein Ausführungsbeispiel einer erfindungsgemäßen Vorrichtung zur Ausgabe von Authentizitätsbescheinigungen in Blockdarstellung;
- Figur 3: ein Ausführungsbeispiel eines erfindungsgemäßen Sicherheitsmoduls in Blockdarstellung; und
- Figur 4: ein Anwendungsbeispiel des erfindungsgemäßen Verfahrens zur Begrenzung der Menge erzeugbarer Gerätezertifikate durch eine erfindungsgemäße Ausgabevorrichtung anhand der involvierten Authentizitätsbescheinigungen in schematischer Darstellung.

Einander entsprechende Teile sind in allen Figuren mit den gleichen Bezugszeichen versehen.

Das erfindungsgemäße Verfahren zur Ausgabe von Authentizitätsbescheinigungen wird nachfolgend am Beispiel der Ausstellung von Gerätezertifikaten beschrieben.

Im Ausgangszustand 110 wurde beispielsweise für ein in der Herstellung befindliches Gerät ein Schlüsselpaar mit einem privaten und einem öffentlichen Schlüssel für ein asymmetrisches kryptographisches Verfahren erzeugt. Der öffentliche Schlüssel des Gerätes soll nun durch ein Gerätezertifikat an beispielsweise die Seriennummer oder die MAC-Adresse des Gerätes gebunden werden. Dies soll durch eine digitale Signatur der Zertifizierungsstelle, die unter Verwendung des Signaturschlüssels der Zertifizierungsstelle und einem Signaturalgorithmus erstellt wird, beglaubigt werden. Es wird daher beispielsweise ein entsprechender Zertifikatsanfrage-Datensatz zur Signatur an eine Ausgabevorrichtung für Authentizitätsbescheinigungen übergeben und eine Signatur angefordert.

Im Verfahrensschritt 111 wird nun überprüft, wie viele digitale Signaturen bereits mit dem Signaturschlüssel im Sicherheitsmodul einer Ausgabevorrichtung für Authentizitätsbescheinigungen ausgestellt wurden. Ist die Anzahl der bereits erzeugten digitalen Signaturen n(SIGN) kleiner als eine vorgegebene maximale Anzahl Nmax, so wird im Verfahrensschritt 112 eine Signatur SIGN erstellt und im Verfahrensschritt 113 ausgegeben. Das Verfahren geht damit in einen Endzustand 115 über. Wird im Verfahrensschritt 111 festgestellt, dass die Anzahl der bereits erstellten digitalen Signaturen n(SIGN) nicht kleiner als die vorgegebene maximale Anzahl Nmax von Signaturen ist, so wird keine weitere Signatur erstellt und das Verfahren geht damit in den Endzustand 114 über. Dies wird für jede Anfrage für die Ausstellung einer Authentizitätsbescheinigung bzw. zur Erzeugung einer digitalen Signatur unter Verwendung eines bestimmten Signaturschlüssels durchgeführt.

Wird zum ersten Mal in der Überprüfung 111 ein negatives Ergebnis erzielt, d.h., ist die maximale Anzahl Nmax an erzeugten digitalen Signaturen erreicht, wird beispielsweise der Signaturschlüssel gesperrt. Optional kann nach einer vorgegebenen Zeit der gesperrte Signaturschlüssel gelöscht werden. Alternativ kann direkt nach Erreichen der Ausgabe der maximalen Anzahl Nmax von digitalen Signaturen SIGN der Signaturschlüssel gelöscht werden, um die weitere Verwendung des Signaturschlüssels zu verhindern.

Das Verfahren kann auch für mehrere Signaturschlüssel, die parallel überwacht werden, verwendet werden. Es können also mehrere unterschiedliche Signaturschlüssel im Sicherheitsmodul eingerichtet werden und für jeden Signaturschlüssel getrennt eine maximale Anzahl von daraus erzeugbaren digitalen Signaturen eingestellt und überprüft werden. Der jeweils eingestellte Maximalwert kann unterschiedlich für jeden Signaturschlüssel sein. Es können auch parallel Signaturschlüssel mit einer Nutzungsbegrenzung auf eine vorgegebene maximale Anzahl Nmax erzeugbarer digitaler Signaturen SIGN mit Signaturschlüssel ohne eine solche Begrenzung geführt und überwacht werden. Die Überwachung der Anzahl erzeugter Signaturen kann für die unterschiedlichen Signaturschlüssel unabhängig voneinander aktiviert werden. Somit können parallel oder auch zeitlich versetzt unabhängig voneinander digitale Signaturen von unterschiedlichen Signaturschlüsseln überwacht und ausgegeben werden.

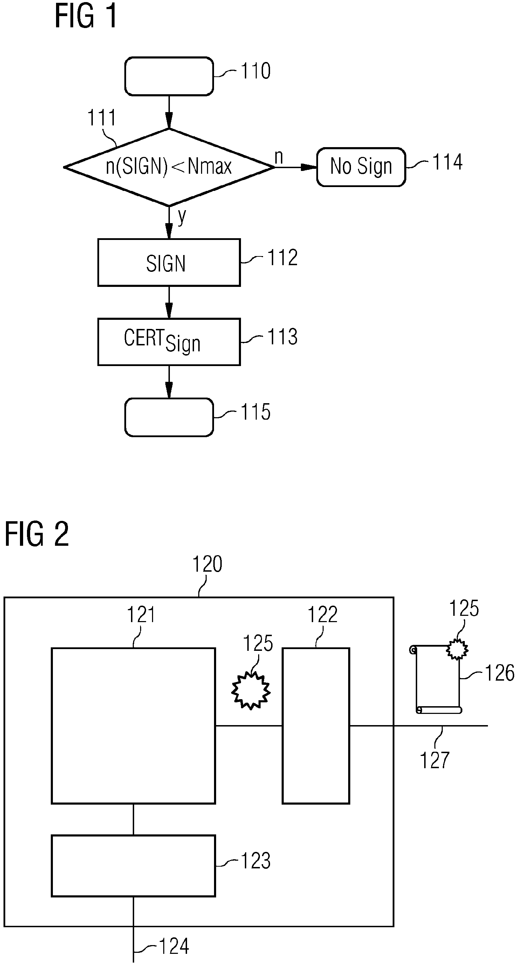

In Figur 2 ist eine Vorrichtung 120 zur Ausgabe von Authentizitätsbescheinigungen dargestellt. Gibt die Vorrichtung 120 Authentizitätsbescheinigungen in Form von signierten Zertifikaten aus, so wird diese auch als Zertifizierungsstelle bezeichnet. Die Ausgabevorrichtung 120 umfasst ein Sicherheitsmodul 121 sowie eine Ausgabeeinheit 122 und eine Administrationseinheit 123, die beispielsweise über eine externe Kommunikationsverbindung 124 mit externen Überwachungsfunktionen bzw. Überwachungseinheiten verbunden sein kann. Über eine weitere Verbindung 127 können Anfragen zur Ausstellung einer Signatur von der Ausgabevorrichtung 120 empfangen und signierte Authentizitätsbescheinigungen 126 ausgegeben werden.

Im Sicherheitsmodul 121 findet die Überprüfung der bereits ausgestellten Signaturen für einen Signaturschlüssel sowie die Erzeugung einer digitalen Signatur 125 unter Verwendung des Signaturschlüssels statt. Die Signatur 125 wird beispielsweise an die Ausgabeeinheit 122 übergeben, dort mit dem Zertifikat verknüpft und als signiertes Zertifikat 126 über die Schnittstelle 127 ausgegeben.

Auf dem Sicherheitsmodul 121 können auch mehrere unterschiedliche Signaturschlüssel eingerichtet sein. Über die Administrationseinheit 123 können Einstellungen, wie beispielsweise die maximale Anzahl erzeugbarer Signaturen, eingestellt bzw. geändert werden. Über die Administrationseinheit 123 können des Weiteren beispielsweise Signaturschlüssel aktiviert, deaktiviert werden oder auch ein Löschen eines Signaturschlüssels veranlasst werden. Eine solche Einstellung wird bevorzugterweise durch Einspielen einer von berechtigter Stelle signierten Datei vollzogen. Eine solche Datei kann beispielsweise vor Ort durch einen Administrator direkt an der Ausgabevorrichtung 120 eingespielt werden. Alternativ kann bei einer externen Kommunikationsverbindung 124 zu einem Server einer berechtigten Stelle ein Administrationsvorgang von dort initiiert und eingestellt werden. Für unterschiedliche Administrationsvorgänge können dabei unterschiedliche Berechtigungen vergeben werden und durch Zugangscodes bzw. Administratorkennungen überprüft werden.

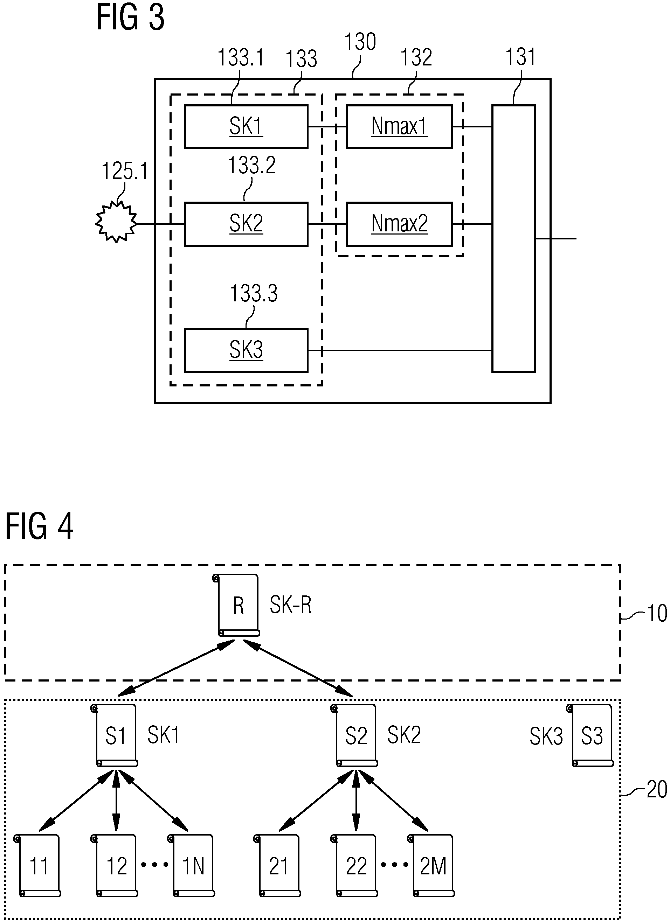

Figur 3 zeigt die schematische Darstellung eines Sicherheitsmoduls 130. Das Sicherheitsmodul 130 umfasst eine Eingabeeinheit 131, eine Vergleichseinheit 132 sowie eine Signatureinheit 133. Im dargestellten Beispiel sind drei Signaturschlüssel SK1, SK2, SK3 in jeweils unterschiedlichen Signatureinheiten 133.1, 133.2 und 133.3 eingerichtet. Für die Signaturschlüssel SK1 und SK2 sind in der Vergleichseinheit 132 Maximalwerte Nmax1, Nmax2 für die Anzahl an erzeugbaren Signaturen eingerichtet. Wird eine Anfrage zur Erzeugung einer digitalen Signatur beispielsweise vom Signaturschlüssel SK1 in der Eingabeeinheit 131 empfangen, wird die Anfrage in der Vergleichseinheit 132 mit dem eingerichteten Maximalwert Nmax1 verglichen. Die Überprüfung der bereits erzeugten digitalen Signaturen kann beispielsweise durch einen Zähler erfolgen, der bei jeder erzeugten Signatur erhöht wird.

Für einen Signaturschlüssel SK3 ist in der Vergleichseinheit 132 kein Maximalwert von erzeugbaren Signaturen eingerichtet, so dass aus dem Signaturschlüssel SK3 beliebig viele Signaturen erzeugt werden können. Alternativ können auch für den nutzungsunbegrenzten Schlüssel SK3 ein Zähler in der Vergleichseinrichtung 132 eingerichtet werden, der Zähler aber auf unendlich bzw. eine sehr hohe Zahl gestellt werden.

Im Sicherheitsmodul 130 bzw. in der Ausgabevorrichtung 120 kann ebenfalls eine Gültigkeitsdauer für die Verwendung eines Signaturschlüssels SK1, SK2, SK3 zur Erzeugung von Signaturen eingestellt werden. Dies kann an eine konkrete Gültigkeitsdauer für einen Schlüssel geknüpft werden. Ist eine Gültigkeitsdauer oder ein Gültigkeitsdatum überschritten, veranlasst das Sicherheitsmodul 130 oder die Ausgabeeinheit 120 das Sperren oder Löschen des entsprechenden Signaturschlüssels bzw. das Sperren der Durchführung des Signaturalgorithmus mit dem entsprechenden Signaturschlüssel SK1, SK2, SK3.

In Figur 4 ist ein Anwendungsszenario zur Begrenzung der Anzahl erzeugbarer Authentizitätsbescheinigungen zur Kontrolle von Auftragsfertigern, die Geräte für einen Hersteller fertigen, beschrieben. Der gestrichelt umrandete Bereich 10 stellt eine geschützte, sichere Umgebung, beispielsweise ein Trustcenter beim Hersteller dar. Der Bereich 20 stellt eine wenig geschützte Umgebung 20, beispielsweise bei einem räumlich abgesetzten Auftragsfertiger, dar. Dabei ist insbesondere eine Verteilung von Zertifikaten und Signaturschlüsseln beim Hersteller bzw. beim Auftragsfertiger dargestellt.

In einem Gerät eines Herstellers soll dabei ein Gerätezertifikat bei der Fertigung eingebracht werden, das über die gesamte Lebensdauer des Gerätes gültig ist und beispielsweise als Vertrauensanker zur Anforderung oder Erstellung von weiteren Zertifikaten für den operativen Betrieb verwendet werden soll. Ist die tatsächliche Fertigung des Gerätes an einen Auftragsfertiger ausgelagert, so sind auch die Gerätezertifikate beim Auftragsfertiger einzubringen. Eine Ausgabevorrichtung, die sich räumlich beim Auftragsfertiger befindet, ist vom Hersteller selbst nur begrenzt kontrollierbar und somit weniger vor Missbrauch durch den Auftragsfertiger oder unbefugte Dritte schützbar. Mit einer Ausgabevorrichtung 120 mit einem Sicherheitsmodul 121, 130 mit Begrenzung der ausstellbaren Signaturen ist es dem Hersteller möglich, das Risiko der Herstellung von unberechtigten Duplikaten, d.h. Raubkopien, zu begrenzen oder auch bei Manipulation oder Diebstahl der Ausgabevorrichtung den Schaden zu begrenzen.

Der Hersteller liefert dazu dem Auftragsfertiger eine Ausgabevorrichtung 120 mit einem Sicherheitsmodul 121 auf dem beispielsweise zwei Signaturschlüssel SK1, SK2 und jeweils eine vorgegebenen maximale Anzahl von Signaturen eingerichtet sind. Des Weiteren liefert der Hersteller dem Auftragsfertiger jeweils ein zum Signaturschlüssel SK1, SK2 gehörendes Zertifikat S1, S3 der Ausgabevorrichtung, in dem jeweils ein zum Signaturschlüssel SK1, SK2 gehörender öffentlicher Schlüssel der Ausgabevorrichtung zugeordnet ist. Die Zertifikate S1, S2 sind jeweils mit dem privaten Schlüssel, der auch als Signaturschlüssel bezeichnet wird, einer vertrauenswürdigen übergeordneten Ausgabevorrichtung einer sogenannten Root-Zertifizierungsstelle, signiert. Das Zertifikat der Ausgabevorrichtung S1, S2 sowie ein Root-Zertifikat R der Root-Zertifizierungsstelle wird zusammen mit dem Gerätzertifikat beim Auftragsfertiger in ein Gerät eingebracht, z.B. als Teil der Geräte-Firmware, so dass eine durchgängige Zertifikatkette bis zum Root-Zertifikat der Root-Zertifizierungsstelle durchgängig vorhanden ist.

Durch die begrenzte Anzahl ausgegebener digitaler Signaturen für einen Signaturschlüssel SK1, SK2 können somit lediglich eine begrenzte Anzahl von digitalen Gerätezertifikaten 11, 12, ... 1N bzw. 21, 22, ... 2M erzeugt werden. Damit können nur eine begrenzte Anzahl von Geräten mit einem gültigen Gerätezertifikat versorgt werden. Eine heimliche Herstellung von Duplikat-Geräten mit gültigen Zertifikaten, ohne Wissen des Herstellers, wird damit verhindert.

Der Signaturschlüssel SK-R der Root-Zertifizierungsstelle, mit dem das Root-Zertifikat R signiert ist, ist lediglich in einem geschützten Trustcenter des Herstellers bekannt. Die Signaturschlüssel SK1, SK2 sind beim Auftragsfertiger in der der Ausgabevorrichtung 120 selbst bzw. im darin enthaltenen Sicherheitsmodul 121 zugriffsgeschützt abgelegt.

Hat der Hersteller beispielsweise einen weiteren Signaturschlüssel SK3 in der Ausgabevorrichtung 120 eingerichtet, so kann er bei Bedarf diesen Signaturschlüssel SK3 aktivieren, indem er beispielsweise ein entsprechendes neues Zertifikat S3 der Ausgabevorrichtung dem Auftragsfertiger übergibt. Der Auftragsfertiger kann dann weitere Gerätezertifikate, die nun jedoch mit dem weiteren Signaturschlüssel SK3 signiert sind, ausgeben.

Auch bei Kompromittierung einer Ausgabevorrichtung 120 ist es kaum möglich, Signaturschlüssel SK1, SK2, SK3 aus einem Sicherheitsmodul 130 auszulesen. Allerdings könnte ein Angreifer die Ausgabevorrichtung 120 bzw. das Sicherheitsmodul 130 verwenden, um eigene Daten signieren zu lassen, beispielsweise zur Erzeugung von eigenen gefälschten Gerätezertifikaten. Da die Anzahl der Signaturen, die mit einem aktiven Schlüssel SK1 der Ausgabevorrichtung 120 bzw. dem Sicherheitsmodul 130 noch erzeugt werden können, begrenzt ist, können nur entsprechend wenige gefälschte Gerätezertifikate erzeugt werden. Auf einen Widerruf des zugehörigen Zertifikats der Ausgabevorrichtung S1 kann dann unter Umständen verzichtet werden. Wird aufgrund einer Kompromittierung die maximale Anzahl von ausgebbaren Signaturen früher als erwartet erreicht, so kann eine Differenz zwischen erzeugten Gerätezertifikaten für den Hersteller und dem eingestellten Maximalwert für ausgebbare Signaturen als Hinweis auf eine Kompromittierung angesehen werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Ausgabe von Authentizitätsbescheinigungen (126), insbesondere von Gerätezertifikaten, durch eine wenig geschützte Ausgabevorrichtung, wobei für jede Authentizitätsbescheinigung (126) eine digitale Signatur (Sign, 125) unter Verwendung eines Signaturschlüssels in einem Sicherheitsmodul (121, 130) erzeugt wird, mit den Verfahrensschritten:
- Überprüfen (111) einer Anzahl von bereits erzeugten digitalen Signaturen vor der Erzeugung einer weiteren digitalen Signatur (Sign, 125) durch das Sicherheitsmodul (121, 130),
- Erzeugen (112) einer digitalen Signatur (Sign, 125) lediglich dann, wenn die Anzahl von bereits erzeugten digitalen Signaturen (Sign, 125) geringer ist als vorgegebene maximale Anzahl (Nmax), und
- Ausgeben (113) einer Authentizitätsbescheinigung (126) mit der digitalen Signatur (125).

2. Verfahren nach Anspruch 1, wobei die maximale Anzahl (Nmax) von erzeugbaren digitalen Signaturen im Sicherheitsmodul (121, 130) eingestellt wird.

3. Verfahren nach einem der vorhergehenden Ansprüche, wobei der Signaturschlüssel (SK) gesperrt und/oder gelöscht wird, wenn die maximale Anzahl (Nmax) von digitalen Signaturen erzeugt wurde.

4. Verfahren nach einem der vorhergehenden Ansprüche, wobei zumindest zwei unterschiedliche Signaturschlüssel (SK1, SK2, SK3) im Sicherheitsmodul (121, 130) eingerichtet werden und für jeden Signaturschlüssel (SK1, SK2, SK3) getrennt eine maximale Anzahl (Nmax1, Nmax2) von erzeugbaren digitalen Signaturen eingestellt und überprüft wird.

5. Verfahren nach Anspruch 4, wobei die unterschiedlichen Signaturschlüssel(SK1, SK2, SK3) unabhängig voneinander aktiviert werden.

6. Verfahren nach einem der vorhergehenden Ansprüche, wobei im Wesentlichen gleichzeitig digitale Signaturen von mindestens einem Signaturschlüssel (SK3) ohne Beschränkung der erzeugbaren Anzahl von digitalen Signaturen erzeugt werden.

7. Verfahren nach einem der vorhergehenden Ansprüche, wobei Administrationsvorgänge, insbesondere eine Einstellung der maximalen Anzahl (Nmax1, Nmax2) ausgebbarer digitaler Signaturen, direkt am Sicherheitsmodul (121, 130) eingestellt werden oder über eine externe Kommunikationsverbindung (124) eingestellt werden.

8. Verfahren nach einem der vorhergehenden Ansprüche, wobei für unterschiedliche Administrationsvorgänge am Sicherheitsmodul (121, 130) verschiedene Berechtigungen und/oder Kennungen eingerichtet werden.

9. Verfahren nach einem der vorhergehenden Ansprüche, wobei mindestens ein Administrationsvorgang am Sicherheitsmodul (121, 130) durch mindestens eine von berechtigter Stelle signierte Datei eingerichtet wird.

10. Vorrichtung (120) zur Ausgabe von digital signierten Authentizitätsbescheinigungen (126), insbesondere von Gerätezertifikaten, die in einer wenig geschützten Umgebung betrieben wird, enthaltend ein Sicherheitsmodul (121, 130) und eine Ausgabeeinheit (122), wobei
das Sicherheitsmodul (121, 130) derart ausgebildet ist
- eine Anzahl von bereits erzeugten digitalen Signaturen vor der Erzeugung einer weiteren digitalen Signatur (125) zu überprüfen,
- eine digitale Signatur (125) unter Verwendung eines Signaturschlüssels lediglich dann zu erzeugen, wenn die Anzahl von bereits erzeugten digitalen Signaturen geringer als eine eingestellte maximale Anzahl (Nmax) ist, und die Ausgabeeinheit (122) derart ausgebildet ist
- Authentizitätbescheinigungen (126) mit einer digitalen Signatur (125) auszugeben.

11. Vorrichtung nach Anspruch 10, wobei das Sicherheitsmodul (121, 130) derart ausgebildet ist den Signaturschlüssel (SK1, SK2) zu sperren und/oder zu löschen, wenn die maximale Anzahl (Nmax) von digitalen Signaturen erzeugt wurde.

12. Vorrichtung nach einem der vorhergehenden Ansprüche, wobei die maximale Anzahl (Nmax) von erzeugbaren digitalen Signaturen im Sicherheitsmodul (121, 130) einstellbar ist.

13. Vorrichtung nach einem der vorhergehenden Ansprüche, wobei das Sicherheitsmodul (121, 130) derart ausgebildet ist, zumindest zwei unterschiedliche Signaturschlüssel (SK1, SK2, SK3) einzurichten und für jeden Signaturschlüssel getrennt eine maximale Anzahl von erzeugbaren digitalen Signaturen einzustellen und zu überprüfen und/oder die unterschiedlichen Signaturschlüssel (SK1, SK2, SK3) unabhängig voneinander zu aktivieren.

14. Vorrichtung nach einem der vorhergehenden Ansprüche, wobei das Sicherheitsmodul (121, 130) derart ausgebildet ist, im Wesentlichen gleichzeitig digitale Signaturen von mindestens einem Signaturschlüssel (SK3) ohne Beschränkung der erzeugbaren Anzahl von digitalen Signaturen zu erzeugen.

15. Vorrichtung nach einem der vorhergehenden Ansprüche, wobei Administrationsvorgänge, insbesondere eine Einstellung der maximalen Anzahl (Nmax) ausgebbarer digitaler Signaturen, direkt am Sicherheitsmodul (121, 130) einstellbar sind oder indirekt über eine externe Kommunikationsverbindung (124) einstellbar sind und/oder für unterschiedliche Administrationsvorgänge am Sicherheitsmodul (121, 130) verschiedene Berechtigungen und/oder Kennungen einrichtbar sind.

16. Vorrichtung nach Anspruch 15, wobei mindestens ein Administrationsvorgang am Sicherheitsmodul (121, 130) durch mindestens eine von berechtigter Stelle signierte Datei einrichtbar ist.

17. Sicherheitsmodul (121, 130) zur Erzeugung von digitalen Signaturen aus mindestens einem Signaturschlüssel (SK1, SK2, SK3), enthaltend eine Vergleichseinheit (132), die derart ausgebildet ist eine Anzahl von bereits erzeugten digitalen Signaturen vor der Erzeugung einer weiteren digitalen Signatur zu überprüfen,
und eine Signatureinheit (133), die derart ausgebildet ist, eine digitale Signatur (125.1) unter Verwendung eines Signaturschlüssels (SK1) lediglich dann zu erzeugen, wenn die Anzahl von bereits erzeugten digitalen Signaturen geringer als die eingestellte maximale Anzahl (Nmax1) ist.

18. Computerprogrammprodukt, das direkt in einen Speicher eines digitalen Prozessors ladbar ist, umfassend Programmcodeteile, die dazu geeignet sind, die Schritte des Verfahrens nach einem der Ansprüche 1 bis 9 durchzuführen.
